# EUROPÄISCHE PATENTANMELDUNG

(11) **EP 1 520 646 A1**
(43) Veröffentlichungstag der Anmeldung: **06.04.2005**
(21) Anmeldenummer: 04023446.0
(22) Anmeldetag: 01.10.2004
(51) Int. Cl.: B23B 5/16, B23K 11/30

(54) **Elektrodenfräskopf und Fräsbalken**

(30) Priorität: 04.10.2003 DE 20315287 U
(71) Anmelder: AEG SVS Schweisstechnik GmbH, 45475 Mülheim/Ruhr (DE)
(72) Erfinder: Busch, Josef, 59555 Lippstadt (DE); Dahl, Thomas, 40667 Meerbusch (DE); Durchschlag, Peter, 45481 Mülheim/Ruhr (DE)
(74) Vertreter: Schumacher, Horst, Dr. Dipl.-Phys.

(57) **Zusammenfassung**

Bei einem Fräsbalken für eine Spanneinrichtung, insbesondere einen Elektrodenfräskopf (1), mit einem mindestens eine Hauptschneide (15, 15'), eine Spanfläche (16) und eine Freifläche (17) aufweisenden Schneidteil, ist die Hauptschneide (15, 15') jeweils als Kante einer Spanfläche (16) mit einer angrenzenden Freifläche (17, 17') ausgebildet. Der Fräsbalken weist einen aus Fräsbalkenseitenflächen (24, 25, 26, 27) gebildeten Klemmteil auf, wobei die mindestens eine Spanfläche (16) als Ausnehmung in einer Fräsbalkenseitenfläche (25) ausgebildet ist und jede an die mindestens eine Spanfläche (16) angrenzende Freifläche (17) um einen vom zu bearbeitenden Material in der Regel abhängigen Winkel von vorzugsweise 1° bis 5°, von der zugeordneten Hauptschneide (15, 15') abfallend auf die der Spanfläche (16) gegenüberliegende Fräsbalkenseitenfläche (27) zu verläuft. Um einen variablen Einsatz der Spanneinrichtung zu ermöglichen, wird vorgeschlagen,
dass in einer der mindestens einen Spanfläche (16) gegenüberliegenden Fräsbalkenseitenfläche (27) eine Ausnehmung, insbesondere in Gestalt einer Kerbe (19), ausgebildet ist, die in ihren Abmessungen an die Form eines in der Einsatzposition des Fräsbalkens (14) in der Spanneinrichtung mit seiner Spitze (20) in die Ausnehmung einführbaren weiteren Schneidelementes, insbesondere eines Flankenfräsmessers (9), angepasst ist.

## Beschreibung

Die Erfindung richtet sich auf einen Fräsbalken für eine Spanneinrichtung, insbesondere einen Elektrodenfräskopf, mit einem mindestens eine Hauptschneide, eine Spanfläche und eine Freifläche aufweisenden Schneidteil, wobei eine Hauptschneide jeweils als Kante einer Spanfläche mit einer angrenzenden Freifläche ausgebildet ist und mit einem aus Fräsbalkenseitenflächen gebildeten Klemmteil, wobei die mindestens eine Spanfläche als Ausnehmung in einer Fräsbalkenseitenfläche ausgebildet ist und jede an die mindestens eine Spanfläche angrenzende Freifläche um einen vom zu bearbeitenden Material in der Regel abhängigen Winkel, von vorzugsweise 1° bis 5°, von der zugeordneten Hauptschneide abfallend auf die der Spanfläche gegenüberliegende Fräsbalkenseitenfläche zu verläuft. Weiterhin richtet sich die Erfindung auf einen Elektrodenfräskopf mit mindestens einer darin ausgebildeten, Stützflächen aufweisenden Elektrodenkappenaufnahme, umfassend ein Oberteil, ein Unterteil und mindestens einen zwischen Ober- und Unterteil klemmend gehaltenen Fräsbalken, der mindestens eine Spanfläche, mindestens eine Freifläche und mindestens eine als Kante einer Spanfläche mit einer angrenzenden Freifläche gebildete Hauptschneide aufweist, wobei die mindestens eine Hauptschneide in die Elektrodenkappenaufnahme hineinragt.

Bei dem zu den Widerstandsschweißverfahren zählenden Punkt- oder Kontaktschweißen werden Elektroden oder Elektrodenkappen verwendet, deren Spitze zur Gewährleistung eines einwandfreien Schweißvorganges zu einer planen bzw. glattflächigen Spitzenfläche ausgeformt sein muss. Zur Bearbeitung der Elektrodenspitzen bzw. Elektrodenkappen werden Elektrodenfräsköpfe verwendet. Diese weisen Messer bzw. Schneidkanten auf, mit denen die Elektrodenspitzen bzw. Elektrodenkappen in die gewünschte Oberflächenform gebracht werden. Nach mehreren Schweißvorgängen abgenutzte Elektrodenspitzen oder Elektrodenkappen werden in derartigen Elektrodenfräsköpfen für einen erneuten Einsatz wieder aufgearbeitet und angefast. Zur Bearbeitung der Elektrodenspitze bzw. der Elektrodenkappenspitze weisen die Elektrodenfräsköpfe eine Elektrodenkappenaufnahme auf, in der die Schneidwerkzeuge angeordnet sind. Dies können zum einen sog. Flankenfräsmesser sein, die radial in die Aufnahme hineinragen. Es können aber auch sog. Fräsbalken oder Balkenmesser vorgesehen sein, die im Grunde der Aufnahme angeordnet sind und mit einer Schneidkante in die Aufnahme hineinragen. Ebenso ist es bekannt, in einem Fräskopf sowohl einen Fräsbalken als auch ein Flankenfräsmesser zur Bearbeitung der Elektrodenspitze oder Elektrodenkappe vorzusehen. Nachteilig bei dem bisherigen Stand der Technik ist es, dass mit jeweils einer Messergeometrie, sei es die Geometrie eines Fräsbalkens oder die Geometrie eines Flankenfräsmessers, immer nur eine bestimmte geometrische Ausbildung der zu bearbeitenden Elektrodenspitze bzw. Elektrodenkappe möglich ist. Eine bearbeitete Elektroden- oder Elektrodenkappenspitze besteht aus einem einen Durchmesser D₁ aufweisenden Spitzenabschnitt und einem daran nach außen auf die Zylinderaußenfläche der Elektrode oder Elektrodenkappe abfallenden Flankenabschnitt. Je nach Anwendungszweck und Elektroden- bzw Elektrodenkappengröße ist der Durchmesser D₁ der Spitzenfläche unterschiedlich ausgebildet. Bei Kombination eines Fräsbalkens mit einem Flankenfräsmesser muss für jeden gewünschten Durchmesser D₁ eine spezielle Kombination von Fräsbalken und Flankenfräsmesser eingesetzt werden. Dies bedeutet, dass bei jedem Durchmesserwechsel ein Wechsel des Elektrodenfräskopfes oder zumindest der Einsatz unterschiedlicher Messer notwendig ist, obwohl die Elektrodenkappenaufnahme die Einführung und Bearbeitung von Elektroden bzw. Elektrodenkappen unterschiedlichen Durchmessers erlauben würde.

Ein gattungsgemäßer Fräsbalken und ein gattungsgemäßer Elektrodenfräskopf sind aus der EP-A-0804986 bekannt. Aus dieser Druckschrift ist ein Fräsbalken mit Hauptschneiden, Spanflächen und daran jeweils angrenzenden Freiflächen bekannt, der in einem Elektrodenfräskopf zwischen Ober- und Unterteil klemmend fixiert wird sowie zusätzlich mit einem zur Bearbeitung der Flanken- bzw. Seitenbereiche einer Elektrode oder Elektrodenkappe mit einem Flankenfräsmesser kombiniert werden kann, das ebenfalls in dem Elektrodenfräskopf angeordnet ist. Auch bei diesem Stand der Technik ist es notwendig, das Flankenfräsmesser und/oder den Fräsbalken auszuwechseln, wenn beispielsweise der Boden oder Spitzenbereich einer Elektrode mit einem kleineren Durchmesser D₁ bearbeitet werden soll und das Flankenmesser mit seiner Schneidkante radial näher an die Rotationsachse des Elektrodenfräskopfes heranreichen soll.

Dem gegenüber liegt der Erfindung die Aufgabe zugrunde, eine Lösung zu schaffen, die variablere Einsatzmöglichkeiten einer Spanneinrichtung, insbesondere eines Elektrodenfräskopfes, sowie eines Fräsbalkens ermöglicht.

Bei einem Fräsbalken der eingangs bezeichneten Art wird diese Aufgabe erfindungsgemäß dadurch gelöst, dass in einer der mindestens einen Spanfläche gegenüberliegenden Fräsbalkenseitenfläche eine Ausnehmung, insbesondere in Gestalt einer Kerbe ausgebildet ist, die in ihren Abmessungen an die Form eines in der Einsatzposition des Fräsbalkens in der Spanneinrichtung mit seiner Spitze in die Kerbe einführbaren weiteren Schneidelementes, insbesondere eines Flankenfräsmessers, angepasst ist.

Hierdurch wird ein Fräsbalken geschaffen, der einem Flankenfräsmesser eine Eingriffsmöglichkeit in den Fräsbalkenquerschnitt ermöglicht, so dass mit ein und demselben Fräsbalken unterschiedlich nah an die Rotationsachse des Elektrodenfräskopfes heranreichende Flankenfräsmesser oder ein radial verschiebbar angeordnetes Flankenmesser kombinierbar sind. Dies ermöglicht die Bearbeitung unterschiedlicher Arbeitsflächendurchmesser und ggf. unterschiedlicher Flankenprofile bei Verwendung eines einzigen Balkenmessertyps.

Dieselben Vorteile sind mit dem erfindungsgemäßen Elektrodenfräskopf verbunden. Hierbei wird die Aufgabe bei einem Elektrodenfräskopf der eingangs bezeichneten Art erfindungsgemäß dadurch gelöst, dass in einer der mindestens einen Spanfläche gegenüberliegenden Fräsbalkenseitenfläche eine Ausnehmung, insbesondere in Gestalt einer Kerbe ausgebildet ist, in die ein an dem Elektrodenfräskopf angeordnetes Flankenfräsmesser mit seiner Spitze einführbar ist.

In zweckmäßiger Ausgestaltung des Fräsbalkens sieht die Erfindung vor, dass die im Folgenden der Einfachheit halber als Kerbe etwa bezeichnete Ausnehmung in der Mitte der zugeordneten Fräsbalkenseitenfläche in Höhe der balkeninnenseitigen Endbereiche der Spanfläche und der Freiflächen angeordnet ist.

Dabei ist weiterhin vorgesehen, dass im Bereich der Kerbe der Fräsbalkenquerschnitt deutlich verringert ist.

Für die zentrale Positionierung eines Flankenfräsmessers ist es gemäß weiterer Ausgestaltung der Erfindung von Vorteil, wenn die Kerbe teilweise in den Freiflächen angeordnet ist.

Ergänzend kann weiterhin vorgesehen sein, dass sich in Längsrichtung des Fräsbalkens jeweils eine Stütz- und Führungsfläche an die Freiflächen anschließt und die Kerbe teilweise in den Stütz- und Führungsflächen angeordnet ist.

In der vorstehend zum Fräsbalken dargelegten Ausgestaltung und Weiterbildung der Erfindung analogerweise zeichnet sich der Elektrodenfräskopf in Ausgestaltung dadurch aus, dass die Kerbe etwa in der Mitte der zugeordneten Fräsbalkenseitenfläche in Höhe der balkeninnenseitigen Endbereiche der Spanfläche und der Freiflächen angeordnet ist.

Hierbei kann es ebenfalls vorgesehen sein, dass im Bereich der Kerbe der Fräsbalkenquerschnitt deutlich verringert ist.

Eine vorteilhafte Weiterbildung des Elektrodenfräskopfes besteht weiterhin darin, dass die Kerbe teilweise in den Freiflächen angeordnet ist.

Zweckmäßig kann es dabei sein, dass sich in Längrichtung des Fräsbalkens jeweils eine Stütz- und Führungsfläche an die Freiflächen anschließt und die Kerbe teilweise in den Stütz- und Führungsflächen angeordnet ist.

Eine besonders gute Kombination von Fräsbalken und Flankenmesser lässt sich dann erreichen, wenn die Spitze des mindestens einen Flankenfräsmessers bis zur formschlüssigen Anlage an die Seitenfläche der Kerbe in diese einführbar ist, was die Erfindung in Ausgestaltung vorsieht.

Eine hinsichtlich der Geometrie der zu verwendenden Flankenfräsmesser sowie der Einsatzpositionen eines jeweiligen Fräsmessers besonders günstige Ausgestaltung ergibt sich dann, wenn das Flankenfräsmesser radial unterschiedlich, jeweils einen anderen radialen Abstand seines oder seiner schneidaktiven Ausgangspunkte(s) zu einer Rotationsachse des Elektrodenfräskopfes oder einer Elektrode oder Elektrodenkappe einstellend an dem Elektrodenfräskopf positionierbar ist.

Hierdurch ist es möglich, die Erstreckung des angefasten Flankenbereiches einer Elektrodenspitze bzw. einer Elektrodenkappenspitze und damit den Durchmesser der Elektrodenspitze variierbar zu gestalten und insbesondere eine gute Bearbeitung der Elektrodenspitze bzw. der Elektrodenkappenspitze mit einem besonders guten und exakten Übergang von der Spitzenfläche zum geneigten Flankenbereich der Elektrode herzustellen.

Für die Ausbildung eines exakten und sauberen Übergangs von dem angefasten Flankenbereich zur eigentlichen Spitze einer zu bearbeitenden Elektrodenspitze oder Elektrodenkappe ist es von Vorteil, wenn ein jeweiliger schneidaktiver Anfangspunkt des Flankenfräsmessers und der höchste Punkt der jeweils zugeordneten Hauptschneide des Fräsbalkens in einer senkrecht zur Rotationsachse des Elektrodenfräskopfes oder einer Elektrode oder Elektrodenkappe aufgespannten Ebene liegen, was die Erfindung weiterhin vorsieht.

Zur Erzielung einer besonders guten Deformationsfestigkeit und zur Verringerung der Verschleißneigung einer Elektrodenspitze bzw. Elektrodenkappenspitze ist es von Vorteil, wenn das mindestens eine Flankenfräsmesser mindestens eine Anfasschneidkante aufweist, die an einem schneidaktiven Anfangspunkt beginnend linear gerade mit zum äußeren Rand der Elektrodenkappenaufnahme ansteigender Neigung von 20° verläuft.

Um in einem eine obere Elektrodenkappenaufnahme und eine untere Elektrodenkappenaufnahme aufweisenden Elektrodenfräskopf mit einem Flankenfräsmesser eine Flankenbearbeitung zweier Elektroden bzw. zweier Elektrodenkappen vornehmen zu können, sieht die Erfindung in Ausgestaltung schließlich vor, dass an dem Flankenfräsmesser zwei Anfasschneidkanten bezüglich einer Flankenfräsmesserlängsachse spiegelsymetrisch zueinander ausgebildet sind.

Die Erfindung ist nachstehend anhand der Zeichnung beispielhaft näher erläutert. Diese zeigt in
- Fig. 1: einen Elektrodenfräskopf mit Flankenfräsmesser und Fräsbalken in Querschnittsdarstellung;
- Fig. 2: eine schematische Aufsicht auf den Elektrodenfräskopf nach Fig. 1;
- Fig. 3: eine schematischen Seitenansicht einer Elektrodenkappe;
- Fig. 4: eine Seitenansicht eines Flankenfräsmessers und in
- Fig. 5: einen Fräsbalken in perspektivischer Darstellung.

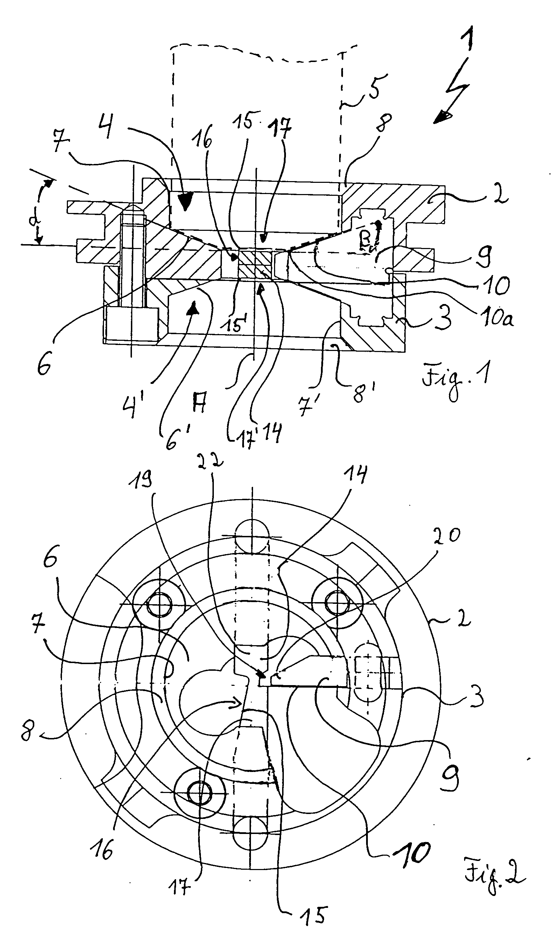

Der in Fig. 1 insgesamt mit 1 bezeichnete Elektrodenfräskopf besteht aus einem Oberteil 2 und einem Unterteil 3. In dem Oberteil 3 ist eine (in der Darstellung der Fig. 1 "obere") Elektrodenkappenaufnahme 4 ausgebildet. Der Elektrodenfräskopf 1 ist im wesentlichen zylinderförmig und in der Aufsicht kreisförmig ausgebildet, so dass die Achse A die Längsachse des Elektrodenfräskopfes 1 und auch die Mittellängsachse der Elektrodenkappenaufnahme 4 darstellt. Da in der Elektrodenkappenaufnahme 4 mittels des Elektrodenfräskopfes 1 die Spitze einer Elektrodenkappe 5 bzw. die Spitze einer Schweißelektrode durch Rotation des Elektrodenfräskopfes für den Betrieb beim Punkt- bzw. Widerstandsschweißen ausgeformt, d. h. angefast und angespitzt werden soll, bildet die Achse A auch die Rotationsachse des Elektrodenfräskopfes 1. In einem dem halben Durchmesser D₁ der Spitzenfläche 11 der Elektrodenkappe 5 entsprechenden Abstand von der Rotations- oder Mittelachse A beginnend ist in der Aufnahme 4 eine zum äußeren Rand der Aufnahme 4 hin ansteigende Stützfläche 6 ausgebildet. Diese Stützfläche 6 ist umlaufend in Teilbereichen der Aufnahme 4 ausgebildet. Die Stützfläche 6 weist eine Steigung in einem Winkel α von 20° auf. An die Stützfläche 6 schließt sich eine ebenfalls über den größten Teil der Aufnahme 4 umlaufend ausgebildete zylindrische Führungsfläche 7 an, die sich parallel zur Achse A erstreckt. Den oberen Abschluss der Aufnahme 4 bildet eine ebenfalls über wesentliche Teile der Aufnahme 4 umlaufende, geneigt ausgebildete Einführfläche 8. Der Durchmesser der Aufnahme 4 im Bereich gegenüberliegender Abschnitte der Führungsfläche 7 ist geringfügig größer als der Außendurchmesser D₂ der Elektrodenkappe 5. In die Aufnahme 4 wird die Elektrodenkappe 5 zur Bearbeitung durch den rotierenden Elektrodenfräskopf 1 eingeführt.

Hierbei stützt sich die Spitze der Elektrodenkappe 5 auf der Stützfläche 6 ab und sind die Seitenflächen der Elektrodenkappe 5 durch die Führungsfläche 7 während des Bearbeitungsvorganges in ihrer Lage orientiert.

In die Aufnahme 4 ragt radial ein Flankenfräsmesser 9 hinein. Das Flankenfräsmesser 9 weist auf seiner der Aufnahme 4 zugewandten Seite eine Anfasschneidkante 10 auf. Das Flankenfräsmesser 9 ist zwischen dem Oberteil 2 und dem Unterteil 3 gefasst und fixiert gehalten. Es ragt soweit in die Aufnahme 4 hinein, dass der schneidaktive Anfangspunkt 10a denselben Abstand (die Hälfte des Durchmessers D₁ der Spitzenfläche 11 der Elektrodenkappe 5) von der Achse A aufweist wie der kappeninnenseitige Beginn der Stützfläche 6. Ebenso liegt der schneidaktive Anfangspunkt 10a der Anfasschneidkante 10 auf derselben Höhe und damit in derselben Ebene wie der innenseitige Anfangspunkt bzw. die Anfangskante der Stützfläche 6. Die Anfasschneidkante 10 verläuft vom schneidaktiven Anfangspunkt 10a an in einer etwa dem halben Durchmesser der Aufnahme 4, also etwas mehr als dem halben Außendurchmesser D₂ der Elektrodenkappe 5 entsprechenden linearen Länge in einem Winkel β von 20° von der Innenseite der Aufnahme 4 zu dem an dem Flankenfräsmesser 9 angrenzenden Abschnitt der Führungsfläche 7 hin ansteigend. Bezüglich der Flankenfräsmesserlängsachse B liegt ebenfalls eine Neigung im Winkel β von 20° vor. Dies führt dazu, dass der sich zwischen der den Durchmesser D₁ aufweisenden Spitzenfläche 11 der Elektrodenkappe 5 und der den Außendurchmesser D₂ aufweisenden Zylinderfläche 12 der Elektrodenkappe 5 kreisringförmig erstreckende Flankenbereich 13 der Elektrodenkappe 5 eine Anfasung bzw. eine Neigung von 20° aufweist.

Eine zu der Elektrodenkappenaufnahme 4 analog ausgebildete, in der Schnittdarstellung spiegelbildliche und in Bezug auf die für die Elektrodenkappenbearbeitung wesentlichen Flächen gleichförmig ausgebildete (in der Darstellung der Fig. 1 "untere") Elektrodenkappenaufnahme 4' ist bei dem Ausbildungsbeispiel auch in dem Unterteil 3 ausgebildet. Die zu der Aufnahme 4 identischen Elemente sind bis auf die Kennzeichnung durch einen Hochstrich mit denselben Bezugsziffern versehen. Ebenso ist das Flankenfräsmesser 9 in bezug auf seine Anfasschneidkante 10 und den schneidaktiven Anfangspunkt 10a der Schneidkante spiegelsymmetrisch aufgebaut. Die spiegelsymmetrische Schneidkante ist mit 10' und der dazu gehörige schneidaktive Anfangspunkt mit 10a' bezeichnet.

Die an dem Flankenfräsmesser 9 ausgebildeten Anfasschneidkanten 10 und 10' sind spiegelsymmetrisch zueinander bezüglich der Flankenfräsmesserlängsachse B ausgebildet und weisen die Steigungen β=β'=20° bezüglich der Achse B auf. Im in den Elektrodenfräskopf 1 eingebauten Zustand liegt diese Flankenfräsmesserlängsachse B in einer senkrecht zur Rotationsachse A aufgespannten Ebene.

Mit den Elementen 10' und 10a' ragt das Flankenfräsmesser in die Aufnahme 4' hinein, so dass eine dort eingeführte Elektrodenkappe 5 dieselbe Bearbeitung wie in einer Aufnahme 4 erfährt und anschließend dieselben Dimensionen wie die in der Fig. 3 dargestellte Elektrodenkappe 5 aufweist.

Weiterhin ist in dem Elektrodenfräskopf ein zwischen Oberteil 2 und Unterteil 3 fixiert und klemmend gehaltener Fräsbalken 14 angeordnet. Der Fräsbalken 14 weist vier rechtwinklig zueinander angeordnete Fräsbalkenseitenflächen 24, 25, 26, 27 auf und ist dabei so positioniert, dass er mit seinen Hauptschneiden 15 und 15' den Grundbereich der Aufnahmen 4 und 4' überstreicht und bei in die Aufnahmen eingesetzter Elektrodenkappe 5 deren jeweilige Spitzenfläche 11 bearbeitet und ausformt. Die Rotationsachse A geht somit durch den Fräsbalken 14. Bei dem Fräsbalken 14 handelt es sich um einen länglichen Körper mit einem die Hauptschneiden 15 und 15' aufweisenden Schneidteil. Die zwischen den beiden Hauptschneiden 15 und 15' aufgespannte Fläche ist die Spanfläche 16 des Schneidteiles bzw. Fräsbalkens 14. Weiterhin weist der Schneidteil des Fräsbalkens 14 eine sich von der Hauptschneide 15 fort erstrekkende erste Freifläche 17 und eine sich von der zweiten Hauptschneide 15' fort erstrekkende zweite Freifläche 17' auf. Die erste Hauptschneide 15 wird somit von der Kante der einander angrenzenden Spanfläche 16 und ersten Freifläche 17 gebildet und die zweite Hauptschneide 15' wird von der Kante der aneinander grenzenden Spanfläche 16 und zweiten Freifläche 17' gebildet. Die erste Freifläche 17 und die zweite Freifläche 17' sind an dem Fräsbalken 14 somit diametral gegenüberliegend ausgebildet. Die erste und zweite Freifläche 17, 17' sind in Bezug auf die ebenen, angrenzenden Schneidelementflächen (Schneidelementfläche 18 in Fig. 5 grenzt an erste Freifläche 17 an) auf die Längsachse des Schneidelementes bzw. Fräsbalkens 14 zu gebogen, beispielsweise mit einem Radius R50, ausgebildet. Einen entsprechend bogenförmigen Verlauf weisen daher auch die Hauptschneiden 15 und 15' auf, da die Spanfläche 16 zwar ebenfalls auf die Fräsbalkenlängsachse zu geneigt ausgebildet ist, aber einen linearen und geradlinigen Verlauf aufweist, so dass die Freifläche 16 plan ausgebildet ist. Der in den Hauptschneiden 15 und 15' ausgebildete Radius findet sich in der Spitzenfläche 11 der Elektrodenkappe 5 wieder. Bei querschnittlicher Darstellung der Elektrodenkappe 5 ist die zwischen dem Durchmesser D₁ befindliche Strecke mit einem identischen Radius versehen. Insgesamt führt dies aufgrund der Rotationsbewegung des Fräskopfes 1 zu einer gewölbten Spitze 11 der Elektrodenkappe 5 im Bereich des Durchmessers D₁.

Die erste Freifläche 17 und zweite Freifläche 17' sind darüber hinaus von den Hauptschneiden 15, 15' ausgehend auf die jeweils gegenüberliegende Seite abfallend mit einer Neigung von 1 bis 5° gegenüber der Ebene der Schneidelementflächen 18 und 21 ausgebildet.

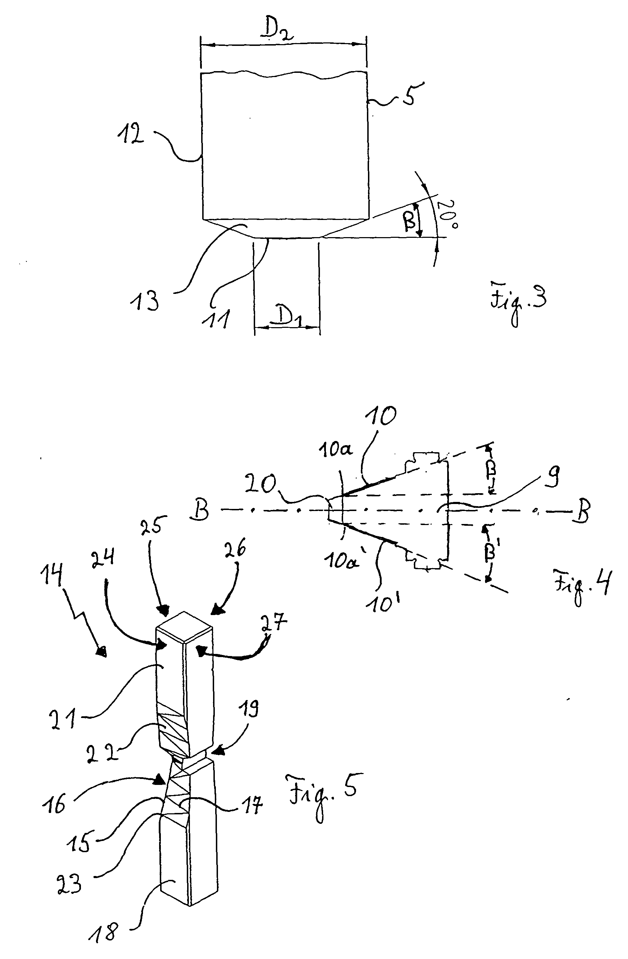

In der der Spanfläche 16 gegenüberliegenden Seitenfläche des Fräsbalkens 14 ist eine kerbenförmige Ausnehmung oder Kerbe 19 ausgebildet. Wie insbesondere aus der Fig. 2 ersichtlich ist, ist diese Kerbe 19 in ihrer geometrischen Ausformung so ausgelegt, dass die Spitze 20 des Flankenfräsmessers 9 in diese Kerbe eingeführt und gewünschtenfalls formschlüssig darin zur Anlage gebracht werden kann. Hiermit ist es möglich, die schneidaktiven Anfangspunkte 10a, 10a' der Anfasschneidkanten 10 und 10' in Bezug auf die Rotationsachse A radial variierbar anzuordnen (zu verschieben) und damit die Ausprägung, d. h. die Breite der Flankenfläche 13 und den Durchmesser D₁ der Spitzenfläche 11 der Elektrodenkappe 5 zu variieren. Je näher der aktive Anfangspunkt 10a, 10a' an der Rotationsachse A angeordnet ist, umso kleiner ist der Durchmesser D₁ und umso größer ist die Breite/Erstreckung der Flankenfläche 13 an der Spitze der jeweils bearbeiteten Elektrodenkappe 5 ausgebildet.

Der jeweilige schneidaktive Anfangspunkt 10a, 10a' und der höchste Punkt 23 der jeweils zugeordneten Hauptschneide 15, 15' liegen in einer senkrecht zur Rotationsachse A aufgespannten Ebene.

Gegenüberliegend bzw. in Richtung auf die Schneidelementfläche 21 zu angrenzend an die erste Freifläche 17 ist auf dem Fräsbalken 14 eine Stütz- und Führungsfläche 22 ausgebildet. Auf dieser Fläche stützt sich der durch den Fräsbalken zu bearbeitende Bereich von Spitzenfläche 11 und Flankenfläche 13 der jeweils in die Aufnahme 4 bzw. 4' eingeführten Elektrodenkappe 5 während der Bearbeitung ab. Die Stütz- und Führungsfläche 22 ist mit demselben Radius auf die Fräsbalkenlängsachse zu gebogen ausgebildet, beispielsweise mit einem Radius von R50, wie die erste Freifläche 17, allerdings mit versetztem Mittelpunkt. Sie weist aber keine Neigung in Richtung auf die die Kerbe 19 aufweisende Seitenfläche des Fräsbalkens 14 hin auf wie die erste Freifläche 17. Analog zu der Stütz- und Führungsfläche 22 ist auf der in Fig. 5 nicht dargestellten, entgegengesetzten Seitenfläche des Fräsbalkens 14 eine an die zweite Freifläche 17' angrenzende Stütz- und Führungsfläche in identischer Weise ausgebildet.

Bei dem Fräsbalken sind somit in einer seiner Seitenflächen die kerbenförmige Ausnehmung 19 und in der gegenüberliegenden Seitenfläche die Spanfläche 16 sowie in den dazu jeweils senkrechten Seitenflächen gegenüberliegend jeweils die erste Freifläche 17 und die Stütz- und Führungsfläche 22 und gegenüberliegend die zweite Freifläche 17' und die zweite Stütz- und Führungsfläche ausgebildet.

Im übrigen verläuft die Spanfläche 16 schräg auf die Längsachse des Fräsbalkens 14 zu, so dass sich im Bereich des Übergangs von den Freiflächen 17, 17' zu den Stützund Führungsflächen 22, der gleichzeitig mit der Position der kerbenförmigen Ausnehmung 19 zusammenfällt, eine deutliche Querschnittsverringerung des Fräsbalkens 14 einstellt.

Mit den die Schneidelementflächen 18, 21 aufweisenden Endbereichen wird der Fräsbalken 14 zwischen dem Oberteil 2 und dem Unterteil 3 klemmend und fixierend gehalten. Vorzugsweise sind dafür entsprechende Ausnehmungen in den Randbereichen von Oberteil 2 und Oberteil 3 ausgebildet.

Alle an dem Elektrodenfräskopf 1 angeordneten Flankenfräsmesser 9 und Fräsbalken 14 sind auswechselbar an dem Elektrodenfräskopf 1 befestigt.

In Ausgestaltung ist es möglich, zwei Flankenfräsmesser 9 vorzusehen, die diametral gegenüberliegend in dem Elektrodenfräskopf 1 angeordnet sind, wovon eines die in Bezug auf die Darstellung in der Fig. 1 nach oben gerichtete Anfasschneidkante 10 und das andere die in Bezug auf die Darstellung in der Fig. 1 nach unten gerichtete Anfasschneidkante 10' aufweist. Hierbei kann zusätzlich ein Fräsbalken 14 weiterhin vorgesehen sein. Es ist aber auch möglich, auf einen solchen zu verzichten. Insbesondere kann bei einem in Fig. 1 dargestellten Elektrodenfräskopf 1 auf einen Fräsbalken 14 verzichtet werden und lediglich ein Flankenfräsmesser 9 in dem Elektrodenfräskopf 1 angeordnet sein. Natürlich ist es auch möglich - ausschließlich oder zusammen mit einem Fräsbalken 14 - zwei Flankenfräsmesser 9 mit jeweils spiegelbildlich angeordneten Anfasschneidkanten 10a und 10a', so dass ein Flankenfräsmesser in der Aufnahme 4 und eines in der Aufnahme 4' schneidet, diametral gegenüberliegend oder im Umfang von oberer Elektrodenkappenaufnahme 4 und unterer Elektrodenkappenaufnahme 4' beabstandet voneinander an dem Elektrodenfräskopf 1 anzuordnen.

Auch muss nicht der Elektrodenfräskopf 1 insgesamt um die Achse A rotieren. Es ist auch möglich, dass lediglich die Elektrodenkappenaufnahmen 4, 4' mit den dort hinein wirkenden Anfasschneidkanten 10, 10' und/oder dem Balkenmesser bzw. Fräsbalken 14 rotieren. Natürlich ist es auch möglich, dass die Elektrode bzw. Elektrodenkappe 5 rotiert und der Elektrodenfräskopf 1 samt Aufnahmen 4, 4' fest steht.

### Bezugszeichenliste

- 1: Elektrodenfräskopf
- 2: Oberteil
- 3: Unterteil
- 4: (obere) Elektrodenkappenaufnahme
- 4': (untere) Elektrodenkappenaufnahme
- 5: Elektrodenkappe
- 6: Stützfläche
- 6': Stützfläche
- 7: Führungsfläche
- 7': Führungsfläche
- 8: Einführfläche
- 8': Einführfläche
- 9: Flankenfräsmesser
- 10: Anfasschneidkante
- 10': Anfasschneidkante
- 10a: schneidaktiver Anfangspunkt
- 10a': schneidaktiver Anfangspunkt
- 11: Spitzenfläche
- 12: Zylinderfläche
- 13: Flankenfläche
- 14: Fräsbalken
- 15: Hauptschneide
- 15': Hauptschneide
- 16: Spanfläche
- 17: erste Freifläche
- 18: Schneidelementfläche
- 19: Kerbe/kerbenförmige Ausnehmung
- 20: Spitze
- 21: Schneidelementfläche
- 22: Stütz- und Führungsfläche
- 23: höchster Punkt der Hauptschneide
- 24, 25, 25, 27: Fräsbalkenseitenflächen

- A: Rotationsachse
- B: Flankenfräsmesserlängsachse
- D₁: Durchmesser der Spitzenfläche der Elektrodenkappe
- D₂: Außendurchmesser der Elektrodenkappe
- α: Steigung der Stützfläche
- β, β': Steigung der Anfasschneidkante sowie der Stützfläche

## Patentansprüche

1. Fräsbalken für eine Spanneinrichtung, insbesondere einen Elektrodenfräskopf (1), mit einem mindestens eine Hauptschneide (15, 15'), eine Spanfläche (16) und eine Freifläche (17) aufweisenden Schneidteil, wobei eine Hauptschneide (15, 15') jeweils als Kante einer Spanfläche (16) mit einer angrenzenden Freifläche (17, 17') ausgebildet ist und mit einem aus Fräsbalkenseitenflächen (24, 25, 26, 27) gebildeten Klemmteil, wobei die mindestens eine Spanfläche (16) als Ausnehmung in einer Fräsbalkenseitenfläche (25) ausgebildet ist und jede an die mindestens eine Spanfläche (16) angrenzende Freifläche (17) um einen vom zu bearbeitenden Material in der Regel abhängigen Winkel, vorzugsweise von 1° bis 5°, von der zugeordneten Hauptschneide (15, 15') abfallend auf die der Spanfläche (16) gegenüberliegende Fräsbalkenseitenfläche (27) zu verläuft,
**dadurch gekennzeichnet,**
**dass** in einer der mindestens einen Spanfläche (16) gegenüberliegenden Fräsbalkenseitenfläche (27) eine Ausnehmung, insbesondere in Gestalt einer Kerbe (19), ausgebildet ist, die in ihren Abmessungen an die Form eines in der Einsatzposition des Fräsbalkens (14) in der Spanneinrichtung mit seiner Spitze (20) in die Ausnehmung einführbaren weiteren Schneidelementes, insbesondere eines Flankenfräsmessers (9), angepasst ist.

2. Fräsbalken nach Anspruch 1,
**dadurch gekennzeichnet,**
**dass** die Ausnehmung etwa in der Mitte der zugeordneten Fräsbalkenseitenfläche (27) in Höhe der balkeninnenseitigen Endbereiche der Spanfläche (16) und der Freiflächen (17, 17') angeordnet ist.

3. Fräsbalken nach Anspruch 1 oder 2,
**dadurch gekennzeichnet,**
**dass** im Bereich der Ausnehmung der Fräsbalkenquerschnitt deutlich verringert ist.

4. Fräsbalken nach einem der vorhergehenden Ansprüche
**dadurch gekennzeichnet,**
**dass** die Ausnehmung teilweise in den Freiflächen (17, 17') angeordnet ist.

5. Fräsbalken nach einem der vorhergehenden Ansprüche
**dadurch gekennzeichnet,**
**dass** sich in Längsrichtung des Fräsbalkens (14) jeweils eine Stütz- und Führungsfläche (22) an die Freiflächen (17, 17') anschließt und die Ausnehmung teilweise in den Stütz- und Führungsflächen (22) angeordnet ist.

6. Elektrodenfräskopf mit mindestens einer darin ausgebildeten, Stützflächen (6, 6') aufweisenden Elektrodenkappenaufnahme (4, 4'), umfassend ein Oberteil (2), ein Unterteil (3) und mindestens einem zwischen Ober- und Unterteil (2, 3) klemmend gehaltenen Fräsbalken (14), der mindestens eine Spanfläche (16), mindestens eine Freifläche (17, 17') und mindestens eine als Kante einer Spanfläche (16) mit einer angrenzenden Freifläche (17, 17') gebildete Hauptschneide (15, 15') aufweist, wobei die mindestens eine Hauptschneide (15, 15') in die Elektrodenkappenaufnahme (4, 4') hineinragt,
**dadurch gekennzeichnet,**
**dass** in einer der mindestens eine Spanfläche (16) gegenüberliegenden Fräsbalkenseitenfläche (27) eine Ausnehmung, insbesondere in Gestalt einer Kerbe (19), ausgebildet ist, in die ein an dem Elektrodenfräskopf (1) angeordnetes Flankenfräsmesser (9) mit seiner Spitze (20) einführbar ist.

7. Elektrodenfräskopf nach Anspruch 6,
**dadurch gekennzeichnet,**
**dass** die Ausnehmung etwa in der Mitte der zugeordneten Fräsbalkenseitenfläche (27) in Höhe der balkeninnenseitigen Endbereiche der Spanfläche (16) und der Freiflächen (17, 17') angeordnet ist.

8. Elektrodenfräskopf nach Anspruch 6 oder 7,
**dadurch gekennzeichnet,**
**dass** im Bereich der Ausnehmung der Fräsbalkenquerschnitt deutlich verringert ist.

9. Elektrodenfräskopf nach einem der Ansprüche 6 bis 8,
**dadurch gekennzeichnet,**
**dass** die Ausnehmung teilweise in den Freiflächen (17,17') angeordnet ist.

10. Elektrodenfräskopf nach einem der Ansprüche 6 bis 9,
**dadurch gekennzeichnet,**
**dass** sich in Längsrichtung des Fräsbalkens (14) jeweils eine Stütz- und Führungsfläche (22) an die Freiflächen (17, 17') anschließt und die Ausnehmung teilweise in den Stütz- und Führungsflächen (22) angeordnet ist.

11. Elektrodenfräskopf nach einem der Ansprüche 6 bis 10,
**dadurch gekennzeichnet,**
**dass** die Spitze (20) des Flankenfräsmessers (9) bis zur formschlüssigen Anlage an die Seitenflächen der Ausnehmung in diese einführbar ist.

12. Elektrodenfräskopf nach einem der Ansprüche 6 bis 11
**dadurch gekennzeichnet,**
**dass** das Flankenfräsmesser (9) radial unterschiedlich, jeweils einen anderen radialen Abstand seines oder seiner schneidaktiven Anfangspunkte(s) (10a, 10a') zu einer Rotationsachse (A) des Elektrodenfräskopfes oder einer Elektrode oder Elektrodenkappe einstellend an dem Elektrodenfräskopf (1) positionierbar ist.

13. Elektrodenfräskopf nach einem der Ansprüche 6 bis 12,
**dadurch gekennzeichnet,**
**dass** ein jeweiliger schneidaktiver Anfangspunkt (10a, 10a') des Flankenfräsmesseres (9) und der höchste Punkt (23) der jeweiligen zugeordneten Hauptschneide (15, 15') des Fräsbalkens (14) in einer senkrecht zur Rotationsachse (A) des Elektrodenfräskopfes oder einer Elektrode oder Elektrodenkappe aufgespannten Ebene liegen.

14. Elektrodenfräskopf nach einem der Ansprüche 6 bis 13,
**dadurch gekennzeichnet,**
**dass** das mindestens eine Flankenfräsmesser (9) mindestens eine Anfasschneidkante (10, 10') aufweist, die an einem schneidaktiven Anfangspunkt (10a, 10a') beginnend linear gerade mit zum äußeren Rand der Elektrodenkappenaufnahme (4, 4') ansteigender Neigung (β) von 20° verläuft.

15. Elektrodenfräskopf nach einem der Ansprüche 6 bis 14,
**dadurch gekennzeichnet,**
**dass** an dem Flankenfräsmesser (9) zwei Anfasschneidkanten (10, 10') bezüglich einer Flankenfräsmesserlängsachse (B) spiegelsymetrisch zueinander ausgebildet sind.
